# EUROPEAN PATENT SPECIFICATION

(11) **EP 4 171 114 B1**
(45) Date of publication and mention of the grant of the patent: **23.09.2026**
(21) Application number: 20943799.5
(22) Date of filing: 30.06.2020
(51) Int. Cl.: H04W 36/00

(54) **NETWORK SLICE AWARE FREQUENCY POINT RESELECTION**
NETZWERK-SLICE-BEACHTENDE FREQUENZPUNKT-NEUAUSWAHL
RESÉLECTION DE POINTS DE FRÉQUENCE TENANT COMPTE DES TRANCHES DE RÉSEAU

(43) Date of publication of application: 26.04.2023
(73) Proprietor: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); WANG, Shukun, Dongguan, Guangdong 523860 (CN)
(74) Representative: Taor, Simon Edward William
(86) International application number: PCT/CN2020/099428
(87) International publication number: WO 2022/000310

(56) References cited:
- CN-A- 107 197 486
- CN-A- 107 223 350
- CN-A- 108 738 096
- CN-A- 111 149 387
- US-A1- 2018 324 602
- US-A1- 2018 324 602
- US-A1- 2020 120 547
- INTEL CORPORATION: "Slice based cell reselection", vol. RAN WG2, no. Athens,Greece; 20180226 - 20180302, 16 February 2018 (2018-02-16), XP051400317, Retrieved from the Internet <URL:http://www.3gpp.org/ftp/tsg%5Fran/WG2%5FRL2/TSGR2%5F101/Docs/> [retrieved on 20180216]
- CATT: "Cell selection and re-selection based on slice", vol. RAN WG2, no. Berlin, Germany; 20170821 - 20170825, 20 August 2017 (2017-08-20), XP051317828, Retrieved from the Internet <URL:http://www.3gpp.org/ftp/Meetings_3GPP_SYNC/RAN2/Docs/> [retrieved on 20170820]
- CHINA TELECOM: "On Allowed NSSAI Usage", vol. RAN WG3, no. Busan, South Korea; 20180521 - 20180525, 20 May 2018 (2018-05-20), XP051445423, Retrieved from the Internet <URL:http://www.3gpp.org/ftp/Meetings%5F3GPP%5FSYNC/RAN3/Docs/> [retrieved on 20180520]
- CATT: "Cell selection and re-selection based on slice", 3GPP DRAFT; R2-1707893, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Berlin, Germany; 20170821 - 20170825, 20 August 2017 (2017-08-20), Mobile Competence Centre ; 650, route des Lucioles ; F-06921 Sophia-Antipolis Cedex ; France , XP051317828

## Description

### TECHNICAL FIELD

Embodiments of the present disclosure generally relate to the communication technical field, and more specifically, to a wireless communication method, and a terminal device.

### BACKGROUND

Network Slice (NS) network architecture is proposed in 5G systems to cope with differences in user requirements. Specifically, different network slices can support different types of services.

In related art, a terminal device can perform cell reselection based on a cell reselection measurement criterion and a cell reselection criterion. Based on the above criterions for cell reselection, the terminal device can reselect to a cell with high channel quality. However, if the service of the terminal device is a network slice-related service, cell reselection according to the above criterions may affect the service transmission of the terminal and affect user experience.
INTEL CORPORATION: "Slice based cell reselection", 3GPP DRAFT; R2-1802958, 16 February 2018, discloses how the gNB can configure the dedicated priorities to provide slice based cell reselection and also respond to the FFS.
US 2018/324602 A1 discloses methods and apparatus for providing broadcast information on supported and non-supported slices using communications systems operating according to new radio (NR) technologies.
CATT: "Cell selection and re-selection based on slice", 3GPP DRAFT; R2-1707893, 20 August 2017, discloses PLMN selection, cell selection and re-selection based on slice in idle mode.
CHINA TELECOM: "On Allowed NSSAI Usage", 3GPP DRAFT; R3-182925, 20 May 2018, discloses potential use cases of allowed NSSAI of RAN side. US 2020/120547 A1 discloses a cell reselection method based on a first information provided by the network, wherein the first information identifies at least one carrier frequency, and associated priority and a network slice supported by the carrier frequency.

### SUMMARY

According to the invention, there is provided a wireless communication method as set out in claim 1, and a terminal device as set out in claim 7**.** Preferred features are set out in the dependent claims. Embodiments of the present disclosure provide a wireless communication and a terminal device, which are helpful for reselection to a cell that meets a network slice requirement of the terminal device, thereby enabling an improved user experience.

Based on the above technical solutions, the terminal device determines the target priority of the frequency point according to network slice related information. Further, the terminal device can perform other subsequent operations according to the target priority, for example, cell reselection measurement or cell reselection and so on. In this way, it can be ensured that the terminal device can reselect to a cell related to the network slice service of the terminal device, thereby guaranteeing the normal transmission of the network slice service of the terminal device.

### BRIEF DESCRIPTION OF THE DRAWINGS

FIG. 1 is a schematic diagram of an application scenario according to an embodiment of the present disclosure.
FIG. 2 is a schematic diagram of a wireless communication method according to an embodiment of the present disclosure.
FIG. 3 is a schematic diagram of another wireless communication method according to an embodiment of the present disclosure.
FIG. 4 is a schematic block diagram of a terminal device according to an embodiment of the present disclosure.
FIG. 5 is a schematic block diagram of a network device according to an embodiment of the present disclosure.
FIG. 6 is a schematic block diagram of a communication device according to another embodiment of the present disclosure.
FIG. 7 is a schematic block diagram of a chip according to an embodiment of the present disclosure.
FIG. 8 is a schematic block diagram of a communication system according to an embodiment of the present disclosure.

### DETAILED DESCRIPTION

The technical solutions in embodiments of the present disclosure will be described below with reference to the drawings in the embodiments of the present disclosure. Obviously, the described embodiments are part of the embodiments of the present disclosure, but not all of the embodiments. All other embodiments obtained by those of ordinary skill in the art based on the embodiments of described herein without creative work fall within the scope of protection of the present disclosure, if falling within the scope defined by the appended claims.

Technical solutions according to embodiments of the present disclosure can be applied to various communication systems, such as, Global System of Mobile communication (GSM) system, Code Division Multiple Access (CDMA) system, Wideband Code Division Multiple Access (WCDMA) system, General Packet Radio Service (GPRS), Long Term Evolution (LTE) system, Advanced Long Term Evolution (LTE-A) system, New Radio (NR) system, evolution system of NR system, LTE-based access to unlicensed spectrum (LTE-U) system, NR-based access to unlicensed spectrum (NR-U) system, Non-Terrestrial Networks (NTN) system, Universal Mobile Telecommunication System (UMTS), Wireless Local Area Networks (WLAN), Wireless Fidelity (WiFi), 5th-Generation (5G) system, or other communication systems, etc.

Generally speaking, traditional communication systems support a limited number of connections and are easy to implement. However, with the development of communication technologies, mobile communication systems will not only support traditional communications, but also support, for example, Device to Device (Device to Device, D2D) communications, Machine to Machine (M2M) communications, Machine Type Communication (MTC), Vehicle to Vehicle (V2V) communications, or Vehicle to everything (V2X), etc. Embodiments of the present disclosure can be applied to these communications systems.

Optionally, the communication systems in embodiments of the present disclosure can be applied to a Carrier Aggregation (CA) scenario, can also be applied to a Dual Connectivity (DC) scenario, and can also be applied to a standalone (SA) network deployment scenario.

Optionally, the communication system in embodiments of the present disclosure can be applied in unlicensed spectrum. The unlicensed spectrum may also be considered as shared spectrum. Or, the communication system in embodiments of the present disclosure can also be applied in licensed spectrum. The licensed spectrum may also be considered as non-shared spectrum.

Embodiments of the present disclosure are described in combination with a terminal device and a network device. The terminal device may also be called User Equipment (UE), access terminal, user unit, user station, mobile station, mobile terminal, remote station, remote terminal, mobile device, user terminal, terminal, wireless communication device, user agent or user device, etc.

The terminal device can be a station (ST) in a WLAN, a cellular phone, a cordless phone, a Session Initiation Protocol (SIP) phone, a Wireless Local Loop (WLL) station, or a Personal Digital Assistant (PDA) device, a handheld device with wireless communication capabilities, a computing device or other processing device connected to a wireless modem, a vehicle-mounted device, a wearable device, or a terminal device in a next-generation communication system, such as a terminal device in the NR network or a terminal device in a future evolved Public Land Mobile Network (PLMN) network.

In embodiments of the present disclosure, the terminal device may be deployed on land, including indoor or outdoor, handheld, wearable or vehicle-mounted; or, the terminal device may be deployed on water (such as on ships, etc.); or, the terminal device may be deployed in the air (such as on aircraft, balloons, and satellites, etc.).

In embodiments of the present disclosure, the terminal device may be a mobile phone, a tablet computer (Pad), a computer with wireless transceiver function, a virtual reality (VR) terminal device, an augmented reality (AR) terminal device, a wireless terminal device in industrial control, a wireless terminal device in self driving, a wireless terminal devices in remote medical, a wireless terminal device in smart grid, a wireless terminal device in transportation safety, a wireless terminal device in smart city, or a wireless terminal device in smart home, etc.

By way of example and not limitation, in embodiments of the present disclosure, the terminal device may also be a wearable device. The wearable device can also be referred to as a wearable smart device, which is a general term for applying wearable technology to intelligently design everyday wear and develop wearable devices, such as glasses, gloves, watches, clothing and shoes. A wearable device is a portable device that is worn directly on the body or integrated into users' clothes or accessories. The wearable device is not only a hardware device, but also realize powerful functions through software support, data interaction, and cloud interaction. Generalized wearable smart devices include full-featured and large-sized devices which can realize complete or partial functions that do not depend on smart phones, such as smart watches or smart glasses, and devices that only focus on a certain type of application functions, and need to cooperate with other devices like smart phones, such as smart bracelets for sign monitoring, or smart jewelry.

In embodiments of the present disclosure, the network device may be a device for communicating with a mobile device. The network device may be an Access Point (AP) in WLAN, a base station (BTS, Base Transceiver Station) in GSM or CDMA, or a base station (NB, NodeB) in WCDMA, an evolved base station in LTE (Evolutional Node B, eNB or eNodeB,), or a relay station or an access point, or a vehicle-mounted device, a wearable device, a network device (gNB) in an NR network, or a network device in future evolved PLMN network or a network device in a NTN network.

By way of example and not limitation, in embodiments of the present disclosure, the network device may have mobile characteristics, for example, the network device may be a mobile device. Optionally, the network device may be a satellite, a or balloon station. For example, the satellite may be a Low Earth Orbit (LEO) satellite, a Medium Earth Orbit (MEO) satellite, a Geostationary Earth Orbit (GEO) satellite, or a High Elliptical Orbit (HEO) satellite, etc. Optionally, the network device may also be a base station deployed on land, or water, etc.

In embodiments of the present disclosure, the network device provides services for a cell, and the terminal device communicates with the network device through transmission resources (for example, frequency domain resources, or spectrum resources) used by the cell. The cell may be a cell corresponding to the network device (for example, base station). The cell may belong to a macro base station or a base station corresponding to a small cell. The small cell here may include: a metro cell, a micro cell, a pico cell, a femto cell, etc. These small cells have the characteristics of small coverage and low transmit power, and are suitable for providing high-speed data transmission services.

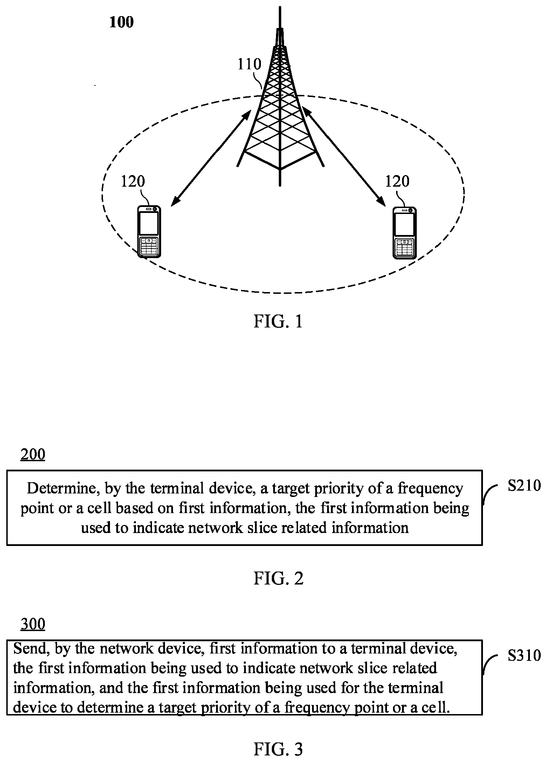

Exemplarily, a communication system 100 to which embodiments of the present disclosure may be applied is shown in FIG. 1. The communication system 100 may include a network device 110. The network device 110 may be a device that communicates with a terminal device 120 (or referred to as a communication terminal, or a terminal). The network device 110 may provide communication coverage for a particular geographic area and may communicate with terminal devices within the coverage area.

FIG. 1 exemplarily shows one network device and two terminal devices. According to some embodiments, the communication system 100 may include multiple network devices and the coverage of each network device may include other numbers of terminal devices, and embodiments of the present disclosure do not impose specific limitations on this.

According to some embodiments, the communication system 100 may further include other network entities such as a network controller, or a mobility management entity, which are not limited in embodiments of the present disclosure.

It should be understood that a device having a communication function in the network/system in embodiments of the present disclosure may be referred to as a communication device. Taking the communication system 100 shown in FIG. 1 as an example, the communication device may include a network device 110 and terminal devices 120 with a communication function, and the network device 110 and the terminal devices 120 may be the specific devices described above, which will not be repeated here. The communication device may further include other devices in the communication system 100, such as other network entities like a network controller or a mobility management entity, which are not limited in embodiments of the present disclosure.

It should be understood that the terms "system" and "network" are often used interchangeably herein. The term "and/or" herein is only an association relationship to describe associated objects, indicating that there can be three kinds of relationships, for example, A and/or B can mean three cases: A alone, B alone, and A and B together. In addition, the character "/" herein generally indicates that the related objects are an "or" relationship.

It is to be understood that "indication/indicate" referred to in embodiments of the present disclosure may be a direct indication, an indirect indication, or representing an association relationship. For example, A indicates B can mean that A indicates B directly, for example, B may be obtained through A; or A indicates B can mean that A indicates B indirectly, for example, A indicates C and B may be obtained through C; or, A indicates B can mean that A and B have an association relationship.

In the description of embodiments of the present disclosure, the term "correspond/corresponding" may indicate a direct correspondence or indirect correspondence between two objects, or may indicate an association relationship between the two objects, or may be a relationship of indicating and being indicated, configuring and being configured, etc.

The cell reselection procedure is a procedure in which a UE in an idle state selects a better cell to provide services by monitoring signal qualities of a serving cell and a neighboring cell.

According to some embodiments, when the signal quality and level of a neighboring cell meet a S criterion and a cell reselection determination criterion is met, the UE may select to camp on the cell.

In the following, the cell reselection measurement criterion and the cell reselection criterion associated with the embodiments of the present disclosure are briefly described.

### Cell Reselection Measurement Criterion

Cell measurement may include intra-frequency measurement and inter-frequency or inter-Radio Access Technology (RAT) measurements.

### 1. Intra-frequency Measurement

Specifically, a UE may obtain, through a broadcast message, a cell reselection parameter, such as an intra-frequency measurement start threshold. The intra-frequency measurement start threshold includes an intra-frequency Reference Signal Receiving Power (RSRP) threshold (i.e., *S_{iltraserachP}*) and an intra-frequency Reference Signal Receiving Quality (RSRQ) threshold (i.e. *S_{intraserachQ}*).

The UE may determine whether to start the intra-frequency measurement based on the measurement result of the serving cell in combination with the intra-frequency measurement start threshold.

For example, the UE may not start the intra-frequency measurement if the measurement result of the serving cell does not meet the intra-frequency measurement start threshold; otherwise, the UE may start the intra-frequency measurement.

Optionally, the measurement result of the serving cell not meeting the intra-frequency measurement start threshold may include: *Sᵣₓₗₑᵥ > S_{intraserachP},* and *S_{qual} > S_{intraserachQ},* otherwise, it indicates that the measurement result of the serving cell meets the intra-frequency measurement start threshold. *Sᵣₓₗₑᵥ* represents an RSRP-related measurement result of the serving cell, for example, *Sᵣₓₗₑᵥ* is equal to Qrxlevmeas-Qrxlevmin, where Qrxlevmeas represents the RSRP of the serving cell, and Qrxlevmin may be -128dBm for example. *S_{qual}* represents an RSRQ-related measurement result of the serving cell, for example, *S_{qual}* is equal to Qqualmeas-Qqualmin, where Qqualmeas represents the RSRQ of the serving cell, and Qqualmin may be -60 for example.

### 2. Inter-frequency and Inter- RAT measurement

Specifically, a cell reselection parameter, such as an inter-frequency measurement start threshold, may be obtained via a broadcast message. The inter-frequency measurement start threshold includes an inter-frequency RSRP threshold (i.e., *S_{nonintraserachP}*) and an intra-frequency RSRQ threshold (i.e., *S_{nonintraserachQ}*).

The UE may determine whether to start inter-frequency or inter-RAT measurement based on the measurement result of the serving cell, a reselection priority of the frequency point combined with the inter-frequency measurement start threshold.

For example, a measurement is always performed for an inter-frequency frequency point or inter-RAT frequency point with a reselection priority higher than a reselection priority of the current frequency point.

As another example, for an inter-frequency frequency point or inter-RAT frequency point with a reselection priority lower than or equal to the reselection priority of the current frequency point, the measurement is performed according to the following rules.

If the measurement result of the serving cell does not meet the inter-frequency measurement start threshold, the inter-frequency or inter-RAT measurement is not started; otherwise, the inter-frequency or inter-RAT measurement is started.

Optionally, the measurement result of the serving cell not meeting the inter-frequency measurement start threshold may include: *Sᵣₓₗₑᵥ > S_{nonintraserachP}*, and *S_{qual} > S_{nonintraserachQ}* ; otherwise, it indicates that the measurement result of the serving cell meets the inter-frequency measurement start threshold. *Sᵣₓₗₑᵥ* represents an RSRP-related measurement result of the serving cell, for example, *Sᵣₓₗₑᵥ* is equal to Qrxlevmeas-Qrxlevmin, wherein Qrxlevmea represents an RSRP of the serving cell, and Qrxlevmin may be-128 dBm for example. *S_{qual}* indicates an RSRQ-related measurement result of the serving cell, for example, *S_{qual}* is equal to Qqualmeas-Qqualmin, where Qqualmeas represents the RSRQ of the serving cell, and Qqualmin may be -60 for example.

### Cell Reselection Criterion

If more than one neighboring cell with the highest priority satisfies the condition, the best cell on the highest priority frequency is selected, and for frequency points of equal priority, a R criterion for intra-frequency cell reselection may be used.

For example, for cell reselection of a high priority cell, the following conditions need to be satisfied.
1. The UE camps on the original cell for more than 1s.
2. The S-value of the cell of high priority frequency is greater than a preset threshold (ThreshXHigh: high priority reselection threshold) and the duration exceeds a reselection time parameter T.

As another example, for intra-frequency cell reselection or cell reselection for same priority frequency point, the following conditions need to be satisfied.
1. The UE camps on the original cell for more than 1s.
2. No cell of high priority frequency meets the reselection requirement condition.
3. The S-value of a cell of intra-frequency or same priority is greater than a preset threshold (Sintrasearch: intra-frequency measurement start threshold) and the R criterion is continuously met during time T (Rt>Rs).

As another example, for cell reselection of low priority frequency point, the following conditions need to be met.
1. The UE camps on the original cell for more than 1s.
2. No cell of high priority (or equal priority) frequency meets the reselection requirement condition.
3. The S value of the serving cell is less than a preset threshold (ThrshServLow: serving frequency point low priority reselection threshold), and the S value of the cell of low priority frequency is greater than a preset threshold (ThreshXLow: low priority reselection threshold value), and the duration exceeds a reselection time parameter value.

It should be understood that the above example cell reselection measurement criterion and cell reselection criterion are only examples and may be modified or adjusted with the development of communication technologies, and the present disclosure is not limited to them.

It can be seen that in the cell reselection measurement and cell reselection, the signal quality of a cell is mainly used as a judgment condition, based on which the reselected cell is a cell with good signal quality. But, after the introduction of network slices, different cells may support different network slices, and the services transmitted by the terminal device may require the cell to support a particular network slice. In this case, the cell reselection by considering only the signal quality of the cell may result in reselection to a cell that does not support the network slice service required by the terminal, which may affect the service transmission of the terminal.

FIG. 2 is a schematic flowchart of a wireless communication method 200 according to an embodiment of the present disclosure. The method 200 may be performed by a terminal device in the communication system shown in FIG. 1. As shown in FIG. 2, the method 200 may include at least some of the following.

**In** S210, the terminal device determines a target priority of a frequency point or a cell based on first information. The first information is used to indicate network slice related information.

It should be understood that the embodiment of the present disclosure may be applied to a cell reselection scenario, and of course, it may also be applied to other scenarios where cell selection is performed, such as cell selection, cell switching scenario, etc. In specific implementations, determination may be made by combining cell switching conditions in related arts with network switching and matching conditions in embodiments of the present disclosure, and for the sake of brevity, detailed descriptions are omitted here.

It should be understood that the priority in embodiments of the present disclosure may also be referred to as frequency point priority for a frequency point, and for a cell, priority may also be referred to as cell priority. For different application scenarios, the priority may correspond to a corresponding name, which is not limited in the present disclosure. For example, for a cell reselection scenario, the priority may also be called cell reselection frequency point priority, or cell reselection priority, etc. Typically, the frequency point priority is used. In the following, the frequency point priority is mainly used as an example, but the present disclosure is not limited to this.

Optionally, in some embodiments, the first information may include at least one of the following:
information of at least one network slice of the terminal device;
information of a network slice supported by a candidate cell, wherein the candidate cell includes at least one of a serving cell of the terminal device, a neighboring cell and a cell supporting the network slice; and
a frequency point priority configuration information set, wherein the frequency point priority configuration information set includes at least one piece of frequency point priority configuration information, each frequency point priority configuration information corresponds to one or more network slices, and each frequency point priority configuration information includes at least one frequency layer and/or a frequency point priority corresponding to the at least one frequency layer.

Optionally, in some embodiments, the information of at least one network slice of the terminal device is information of at least one network slice supported by the terminal device, or information of at least one network slice selected by the terminal device, or pre-configured network slice information, or information of at least one allowable network slice of the terminal device, or information of at least one registered network slice of the terminal device.

Optionally, in some other embodiments, the information of at least one network slice of the terminal device is a union of at least two of the information of at least one network slice supported by the terminal device, the information of at least one network slice selected by the terminal device, the information of at least one allowable network slice of the terminal device, the information of at least one registered network slice of the terminal device, and the pre-configured network slice information; or
optionally, in some other embodiments, the information of at least one network slice of the terminal device is an intersection of at least two of the information of at least one network slice supported by the terminal device, the information of at least one network slice selected by the terminal device, the information of at least one allowable network slice of the terminal device, the information of at least one registered network slice of the terminal device, and the pre-configured network slice information.

Optionally, the information of at least one network slice selected by the terminal device may be selected by the terminal device based on at least one of the type of the terminal device, the type of service to be transmitted, or the priority of the network slice, and so on.

Optionally, the pre-configured network slice information is network slice information pre-configured on the terminal device. For example, the pre-configured network slice information may be pre-configured information of at least one network slice supported by the terminal device, or pre-configured information of at least one network slice corresponding to the service type supported by the terminal device, and so on.

Optionally, the information of at least one allowable network slice of the terminal device may be configured by the network device or may be pre-configured.

Optionally, the information of at least one registered network slice of the terminal device may be a network slice registered during a network registration process.

Optionally, in some embodiments, the information of at least one network slice of the terminal device includes at least one of:
identity information of the at least one network slice, such as at least one of a slice identity (Slice ID), Single Network Slice Selection Assistance Information (S-NSSAI), and Network Slice Selection Assistance Information (NSSAI);
at least one frequency point (or, in other words, frequency layer) corresponding to the at least one network slice;
at least one cell corresponding to the at least one network slice; and
at least one priority corresponding to the at least one network slice.

In some embodiments, the network device may be a network device providing services for the serving cell, and the terminal device may obtain, from the serving cell, information of at least one network slice supported by the serving cell. For example, the terminal device may obtain information of at least one network slice supported by the serving cell via a system broadcast message or Radio Resource Control (RRC) signaling. Alternatively, information of the at least one network slice supported by the serving cell may be obtained by other messages or signaling, and the present disclosure does not impose specific limitations on this.

In some other embodiments, the terminal device may also obtain, from the serving cell, information of at least one network slice supported by at least one neighboring cell. For example, the terminal device may obtain the information of at least one network slice supported by at least one neighboring cell via a system broadcast message or RRC signaling. Alternatively, the information of at least one network slice supported by at least one neighboring cell may be obtained via other messages or signaling, and the present disclosure does not impose specific limitations on this.

In some other embodiments, the terminal device may also obtain, from the serving cell, information of at least one network slice supported by at least one cell or frequency point supporting the network slice. For example, the terminal device may obtain the information of at least one network slice supported by the at least one cell or frequency point via a system broadcast message or RRC signaling. Or, the terminal device may also obtain the information of at least one network slice supported by at least one cell or frequency point through other messages or signaling, and the present disclosure does not impose specific limitations on this.

It should be understood that in embodiments of the present disclosure, the at least one network slice in the network slice information of the terminal device constitute a first network slice set. The cell supporting the network slice may be a cell supporting any of the at least one network slice, or may be a cell supporting the first network slice set, or may be a cell supporting at least one network slice in the first network slice set, or may be a cell supporting a particular network slice. For example, the particular network slice is a network slice with the highest priority in a first network slice set or a network slice which the terminal device expects to select (or, a network slice which the terminal device is most interested in). Similarly, a frequency point supporting the network slice may be a frequency point supporting any network slice, or may be a frequency point supporting the first network slice set, or may be a frequency point supporting at least one network slice in the first network slice set, or may be a frequency point supporting a particular network slice. For example, the particular network slice is a network slice with the highest priority in a first network slice set or a network slice which the terminal device expects to select (or, a network slice which the terminal device is most interested in).

Optionally, the network slice which the terminal device expects to select may include one or more network slices of the network slices allowed to the terminal device, or may include one or more of network slices supported by the terminal device, or may include one or more network slices determined based on information such as the type of service to be transmitted, the type of terminal, and so on, and embodiments of the present disclosure do not impose specific limitations on this.

Optionally, in some embodiments, the information of the network slice supported by the serving cell includes at least one of:
identity information of the network slice supported by the serving cell;
a frequency point corresponding to the network slice supported by the serving cell;
a cell corresponding to the network slice supported by the serving cell; and
a priority corresponding to the network slice supported by the serving cell.

Optionally, in some embodiments, the information of the network slice supported by the neighboring cell includes at least one of:
identity information of the network slice supported by the neighboring cell;
a frequency point corresponding to the network slice supported by the neighboring cell;
a cell corresponding to the network slice supported by the neighboring cell; and
a priority corresponding to the network slice supported by the neighboring cell.

Optionally, in some embodiments, the information of the network slice supported by at least one cell or frequency point supporting the network slice includes at least one of:
identity information of the network slice supported by at least one cell or frequency;
a frequency point corresponding to the network slice supported by at least one cell or frequency;
a cell corresponding to the network slice supported by at least one cell or frequency;
a priority corresponding to the network slice supported by at least one cell or frequency.

In embodiments of the present disclosure, the frequency point priority configuration information set includes at least one piece of frequency point priority configuration information, each frequency point priority configuration information corresponds to one or more network slices, and each frequency point priority configuration information includes at least one frequency layer and/or a frequency point priority corresponding to the at least one frequency layer.

It should be understood that in embodiments of the present disclosure, the frequency layer may also be referred to as a frequency point.

Optionally, in some embodiments, the first information may further include a cell priority configuration information set. The cell priority configuration information set includes at least one piece of cell priority configuration information, each cell priority configuration information corresponds to one or more network slices, and each cell priority configuration information includes at least one cell and/or a cell priority corresponding to the at least one cell.

Hereinafter, the cell reselection method of embodiments of the present disclosure is specified in conjunction with example embodiments.

### First Embodiment

In the first embodiment, the terminal device may adjust the priority of the frequency point corresponding to the network slice supported by the serving cell or the priority of the frequency point of the serving cell as the first frequency point priority.

That is, the terminal device may adjust the frequency point corresponding to the network slice supported by the serving cell or the frequency point of the serving cell as the frequency point of the first frequency point priority.

Optionally, the first frequency point priority is higher than the priority of a particular cell or a particular frequency point, or, the first frequency point priority is higher than a particular priority threshold.

Optionally, the particular cell may be the serving cell and the particular frequency point may be a frequency point of the serving cell, or called as a serving frequency point. Or, the particular priority threshold may be a priority corresponding to a frequency point corresponding to the network slice supported by the serving cell, or may be a priority corresponding to a particular frequency point corresponding to the network slice supported by the serving cell, or may be a priority corresponding to the frequency point of the serving cell before adjustment. The priority after adjustment may be higher than or equal to the priority before adjustment.

As a specific example, the first frequency point priority may be the highest frequency point priority.

That is, the frequency point corresponding to the network slice supported by the serving cell or the frequency point of the serving cell is adjusted to the frequency point with the highest frequency point priority.

Further, the terminal device may perform cell reselection measurement and/or cell reselection in accordance with the first frequency point priority. For example, the terminal device may perform cell reselection measurement and/or cell reselection for a frequency point or a cell supporting a particular network slice according to the first frequency point priority, or may perform cell reselection measurement and/or cell reselection for the serving frequency point according to the first frequency point priority, or may perform cell reselection measurement and/or cell reselection for a cell of the serving frequency point according to the first frequency point priority. For the specific cell reselection measurement and cell reselection procedure, reference may be made to related arts, and detailed descriptions are omitted here for brevity.

Optionally, the particular network slice may refer to a network slice with the highest priority in the first network slice set or a network slice which the terminal device expects to select (or in other words, a network slice which the terminal device is most interested in), or a network slice supported by the serving cell.

That is, in the first embodiment, the terminal device first determines the network slice supported by the serving cell or the frequency layer corresponding to the serving cell, further determines the frequency layer as the frequency layer with high frequency point priority, and then performs cell reselection measurement and/or cell reselection based on the adjusted frequency point priority.

Optionally, in some embodiments, the terminal device may also adjust the frequency point corresponding to the network slice supported by the serving cell or the frequency point priority corresponding to the frequency point of the serving cell to the first frequency point priority in a case where a first condition is met.

Optionally, the first condition may include at least one of the following that:
the network slice supported by the serving cell includes at least one network slice in the first network slice set;
the network slice supported by the serving cell includes a network slice with the highest priority in the first network slice set;
the network slice supported by the serving cell includes the network slice which the terminal device expects to select;
the network slice supported by the serving cell is based on frequency point deployment;
the network slice supported by the serving cell is based on cell deployment;
the network slice supported by the serving cell is based on Tracking Area (TA) deployment;
the terminal device has a network slice support capability; and
the terminal device has the information of at least one network slice of the terminal device on the terminal device.

Optionally, in embodiments of the present disclosure, the network slice supported by the serving cell being based on frequency point deployment may mean that the network slice supported by the serving cell is per frequency point, i.e., each frequency point may be deployed with a corresponding supported network slice. Optionally, the supported network slices corresponding to different frequency points may be the same or may be different.

Optionally, in embodiments of the present disclosure, the network slice supported by the serving cell being based on cell deployment may mean that the network slice supported by the serving cell is per cell, i.e., each cell may be deployed with a corresponding supported network slice. Optionally, the supported network slices corresponding to different cells may be the same or may be different.

Optionally, the terminal device having a network slice support capability refers to that the terminal device can support transmission of network slice related services, or, the terminal device has the ability to rely on network slices for communication and service transmission.

Optionally, the terminal device having the information of at least one network slice of the terminal device on the terminal device may mean that the terminal device is configured with information of at least one network supported network slice, or information of at least one allowed network slice, or information of at least one registered network slice and so on, or there is at least one expected network slice on the terminal device, or, the terminal device has selected "network slice information selected by the terminal device". In other words, the terminal device is able to know the network slice information of the terminal device so that the terminal device can use such information in determining the priority.

In the first embodiment, by determining the frequency point corresponding to the network slice supported by the serving cell or the frequency point corresponding to the serving cell as a high priority frequency point, it is helpful for reselection to a cell supporting the network slice of the terminal device in cell reselection, thereby further enabling normal transmission of services when the terminal device initiates network slice related services, and consequently improving user experience.

### Second Embodiment

In the second embodiment, the terminal device may adjust the priority of a frequency point or a cell supporting a particular network slice as a second priority. The second priority is a high priority.

That is, the terminal device may adjust the frequency point or cell supporting the particular network slice to a second priority frequency point or cell, or a high priority frequency point or cell.

In the second embodiment, the particular network slice includes at least one network slice in a first network slice set. The first network slice set is the at least one network slice included in the information of at least one network slice of the terminal device. That is, the cell or frequency point supporting the particular network slice is a cell or frequency point supporting at least one of the network slices of the terminal device.

Optionally, the second priority is higher than the priority of the particular cell or particular frequency point, and the second priority is higher than a particular priority threshold.

Optionally, the particular cell may be a serving cell and the particular frequency point may be a frequency point of the serving cell, or called as a serving frequency point. Or, the particular priority threshold may be a priority corresponding to a frequency point corresponding to a network slice supported by the serving cell, or may be a priority corresponding to a particular frequency point corresponding to a network slice supported by the serving cell, or a priority corresponding to the serving frequency point, or a priority corresponding to the frequency point or cell supporting the particular network slice before adjustment. The priority after adjustment may be higher than or equal to the priority before adjustment.

As a specific example, the second priority may be the highest priority.

That is, the frequency point or cell supporting the particular network slice is adjusted to the frequency point or cell with the highest priority.

Further, the terminal device may perform cell reselection measurement and/or cell reselection in accordance with the second priority. For example, the terminal device may perform cell reselection measurement and/or cell reselection for a frequency point or cell supporting the particular network slice according to the second priority; or, the terminal device may perform cell reselection measurement and/or cell reselection for the serving frequency point according to the second frequency point priority; or, the terminal device may perform cell reselection measurement and/or cell reselection for a cell of the serving frequency point according to the second frequency point priority. For the specific cell reselection measurement and cell reselection procedures, reference can be made to related arts, and detailed description are omitted here for brevity.

That is, in the second embodiment, the terminal device first determines the frequency layer corresponding to the cell or frequency point supporting the network slice(s) of the terminal device, further determines this frequency layer as a high priority frequency layer, and then performs cell reselection measurement and/or cell reselection based on the adjusted priority.

Optionally, in some embodiments, the terminal device may also adjust the frequency point or cell that supports the particular network slice as the second priority in a case where a second condition is met.

Optionally, the second condition may include at least one of the following:
the network slice supported by the serving cell includes at least one network slice in the first network slice set;
the network slice supported by the serving cell includes a network slice with the highest priority in the first network slice set;
the network slice supported by the serving cell includes the network slice which the terminal device expects to select;
the network slice supported by the serving cell is based on frequency point deployment;
the network slice supported by the serving cell is based on cell deployment;
the network slice supported by the serving cell is based on TA zone deployment;
the terminal device has a network slice support capability; and
the terminal device has the information of at least one network slice of the terminal device on the terminal device.

For the meaning of the second condition, reference may be made to the relevant description of the first condition in the first embodiment and repeated descriptions will be omitted here.

In the second embodiment, by determining the frequency point or cell supporting the network slice(s) of the terminal device as a high priority frequency point or cell, it is helpful for reselection to a cell supporting the network slice(s) of the terminal device in cell reselection, and it is further possible to ensure normal transmission of the services when the terminal device initiates network slice related services, thereby improving user experience.

### Third Embodiment

In the third embodiment, the target priority of the frequency point or cell may be determined based on configuration of the network device.

Optionally, in some embodiments, the terminal device may obtain a frequency point priority configuration information set from the network device. For example, the terminal device may obtain the frequency point priority configuration information set from a broadcast message or RRC signaling of the serving cell. In some other embodiments, the frequency point priority configuration information set may be pre-configured, or predefined.

Optionally, the RRC signaling may be an RRC release message, or may be other RRC signaling, for example, dedicated RRC signaling, and embodiments of the present disclosure do not impose specific limitations on this.

According to the particular network slice, the terminal device may determine corresponding frequency point priority configuration information for scheduling the particular network slice in the frequency point priority configuration information set as target frequency point priority configuration information, and further determines the target priority according to the target frequency point priority configuration information, and thereby performs cell reselection measurement and/or cell reselection according to the target priority.

As an embodiment, the particular network slice is indicated by a network device. For example, the network device may indicate, via first indication information, the terminal device to determine target priority information and/or a slice identity (e.g., Slice ID, S-NSSAI, etc.) of the particular network slice based on the particular network slice. Optionally, the first indication information may be carried in any downlink signaling or downlink message, e.g., RRC signaling (e.g., carried in an RRC Release message), or Downlink Control Information (DCI), etc.

It should be understood that the embodiments of the present disclosure do not specifically limit the order in which the terminal device obtains the frequency point priority configuration information set and the first indication information. In one implementation, the network device may first receive the first indication information to know that it is needed to determine a target priority based on the particular network slice, and further, may receive the frequency point priority configuration information set sent by the network device, and then determine the information of the target priority based on the particular network slice and the frequency point priority configuration information set. In another implementation, the terminal device may first receive the frequency point priority configuration information set, and then upon receipt of the first indication information sent by the network device, the terminal device may determine the information of the target priority based on the particular network slice and the frequency point priority configuration information set. That is, the first indication information may be used to trigger the terminal device to determine the target priority based on the network slice related information, and further to perform cell reselection measurement and/or cell reselection based on the target priority.

Optionally, the terminal device may also determine whether to determine target priority information according to the particular network slice and the frequency point priority configuration information set based on whether the frequency point priority configuration information is configured. For example, in a case where the frequency point priority configuration information set is configured, information on the target priority is determined according to the particular network slice and the frequency point priority configuration information set; or, if the frequency point priority configuration information set is not configured on the terminal device, the terminal device may perform cell reselection measurement and/or cell reselection according to frequency priority information or cell priority information configured in the RRC signaling or broadcast message.

Optionally, the particular network slice indicated by the network device may be determined based on network slice information of the terminal device. For example, the particular network slice may be a network slice with the highest priority in the first network slice set, or a network slice that supports the services of the terminal device, or a network slice that the terminal device expects to select, etc.

As another embodiment, the particular network slice may be determined by the terminal device. For example, the terminal device may determine the particular network slice according to network slice related information. For example, the terminal device may determine the particular network slice according to at least one of the priority of the network slice, the type of the terminal device, the type of service to be transmitted by the terminal device, etc.

As an example, the particular network slice may be a high priority network slice, or a highest priority network slice.

As an example, the particular network slice may be a network slice that the terminal device expects to select (or a network slice that the terminal device is interested in, or a network slice requested by the terminal device).

Optionally, the type of the terminal device may be, for example, a URLLC terminal, an MTC terminal or an eMTC terminal, an eMBB terminal or a terminal in NB-IoT, and so on. Different types of terminal devices may support different types of network slices. As an example, the terminal device may determine the network slice supported by the type of the terminal device as the particular network slice.

Optionally, the service type of the service to be transmitted by the terminal device may be, for example, Ultra-Reliable and Low Latency Communication (URLLC), Machine Type Communication (MTC) or massive Machine Type of Communication (mMTC) service, Enhanced Mobile Broadband (eMBB), Industrial Internet of Things (IIOT) service, Narrow Band Internet of Things (NB-IoT) service, and so on. The types of network slices required for different services may vary. As an example, the terminal device may determine the network slice that supports the type of service to be transmitted as the particular network slice.

In some embodiments of the present disclosure, the terminal device determines the frequency point priority configuration information corresponding to the particular network slice based on the particular network slice (the terminal device determines or selects the frequency point priority configuration information corresponding to the particular network slice in the frequency point priority configuration information set), and performs cell reselection measurement and/or cell reselection according to the frequency point and/or frequency point priority information obtained in such the frequency point priority configuration information.

Thus, in the third embodiment, cell reselection measurement and/or cell reselection is performed according to the frequency point priority configured by the network device, and this is beneficial to ensure that the terminal device reselects to a cell that supports the network slice of the terminal device, further enabling normal transmission of the service when the terminal device initiates the network slice related service, thereby improving the user experience.

In the above embodiments, the terminal device may perform cell reselection measurement and/or cell reselection according to the first information within a first duration. For example, in the first embodiment and the second embodiment, the terminal device may perform cell reselection measurement and/or cell reselection within the first duration according to network slice information of the terminal device and/or network slice information supported by the candidate cell. In the third embodiment, the terminal device may perform cell reselection measurement and/or cell reselection within the first duration according to the information in the frequency point priority configuration information set. Outside the first duration, the terminal device may perform cell reselection measurement and/or cell reselection according to frequency priority information or cell priority information configured in the RRC signaling or broadcast message.

Optionally, the first duration may be configured by the network device or may also be pre-configured. For example, the network device may configure the first duration to the terminal device via RRC signaling, optionally, the RRC signaling may be an RRC Release message or may also be other RRC signaling, e.g., dedicated RRC signaling, and embodiments of the present disclosure do not impose specific limitations on this.

Optionally, the terminal device may perform cell reselection measurement and/or cell reselection according to the first information based on a certain period, or may also perform cell reselection measurement and/or cell reselection according to the first information based on a trigger of the network device (e.g., dedicated signaling, specific indication, etc.), and embodiments of the present disclosure do not impose specific limitations on this.

Optionally, the first duration is the duration of a first timer. The first timer may be configured by the network device or may be pre-configured. For example, the network device may configure the first timer to the terminal device via RRC signaling, optionally, the RRC signaling may be an RRC Release message, or may be other RRC signaling, for example, dedicated RRC signaling, and embodiments of the present disclosure do not impose specific limitations on this.

In some embodiments of the present disclosure, the network device may configure the first timer in the RRC Release message to control the effective time for the terminal device to perform cell reselection using a slice-based approach. For example, if the terminal device receives the RRC Release message in which the first timer is configured, the terminal device starts the first timer and during running of the first timer, the terminal device performs cell reselection using the slice-based frequency priority; otherwise, the terminal device performs cell reselection measurement and/or cell reselection based on the frequency priority given in the dedicated RRC signaling, or the frequency priority given in the system broadcast.

In some other embodiments of the present disclosure, the network slice(s) of the terminal device is(are) different from the network slice(s) supported by the network device. Here, the difference may refer to a partial difference or may refer to a complete difference. Alternatively, the terminal device may not support a network slice but the network device may support the network slice. In this case, it can be considered that the network slices of the terminal device and the network device do not match, or that the terminal device and the network device do not match and the terminal device is not a UE matching the network device.

In some further embodiments of the present disclosure, if the network slice(s) of the terminal device and the network slice(s) supported by the network device are partially the same, or the particular slice is the same, it may be considered that the network slices of the terminal device and the network slice of the network device match, or that the terminal device and the network device match, and that the terminal device is a UE matching the network device.

In some embodiments, the network device may indicate that the terminal device has access to a cell or has restricted access to a cell under a particular condition. Optionally, the particular condition may include that the network slice(s) of the terminal device match the network slice(s) of the network device. For example, the network device may send second indication information to the terminal device. The second indication information is use for indicating that a matching UE can access or indicating a non-matching UE cannot access; or, the second indication information is use for indicating a UE restricted access and/or a cell for the restricted access. In this case, the network slices of the terminal device and the network device do not match. In one implementation, for such UE, the UE may consider that the cell is not barred, but that the cell is not a suitable cell and is an acceptable cell (e.g., only limited service transmission can be performed, such as emergency service). In another implementation, for this type of UE, the UE can consider that the cell is barred, i.e. the cell cannot be accessed.

The wireless communication method according to embodiments of the present disclosure is described in detail above in connection with FIG. 2 from the perspective of the terminal device, and the wireless communication method according to some other embodiments of the present disclosure will be described in detail below in connection with FIG. 3 from the perspective of a network device. It should be understood that the description on the side of the network device corresponds to the description on the side of the terminal device, and similar descriptions can be found above and will not be repeated here to avoid repetition.

FIG. 3 is a schematic flowchart of a wireless communication method 300 according to another embodiment of the present disclosure. The method 300 may be performed by a network device in the communication system shown in FIG. 1. As shown in FIG. 3, the method 300 includes the following.

In S310, the network device sends first information to a terminal device. The first information is used to indicate network slice related information, and the first information is used for the terminal device to determine a target priority of a frequency point or a cell.

Optionally, in some embodiments, the first information includes at least one of:
information of a network slice supported by a candidate cell, wherein the candidate cell includes at least one of a serving cell of the terminal device, a neighboring cell and a cell supporting the network slice; and
a frequency point priority configuration information set, wherein the frequency point priority configuration information set includes at least one piece of frequency point priority configuration information, each frequency point priority configuration information corresponds to one or more network slices, and each frequency point priority configuration information includes at least one frequency layer and/or a frequency point priority corresponding to the at least one frequency layer.

Optionally, in some embodiments, the method 300 further includes:
sending, by the network device, the information of the network slice supported by the candidate cell to the terminal device via a broadcast message or Radio Resource Control (RRC) signaling.

Optionally, in some embodiments, information of the network slice supported by the candidate cell includes at least one of:
identity information of the network slice supported by the candidate cell;
a frequency point corresponding to the network slice supported by the candidate cell;
a cell corresponding to the network slice supported by the candidate cell; and
a priority corresponding to the network slice supported by the candidate cell.

Optionally, in some embodiments, the frequency point priority configuration information set is obtained through a Radio Resource Control (RRC) release message.

Optionally, in some embodiments, the method 300 further includes:
sending, by the network device, first indication information to the terminal device, wherein the first indication information is used to indicate the terminal device to determine the target priority and/or identity information of a particular network slice according to the particular network slice.

Optionally, in some embodiments, the method 300 further includes:
sending, by the network device, first configuration information to the terminal device, wherein the first configuration information is used to configure a first duration, and during the first duration, the terminal device performs cell reselection measurement and/or cell reselection based on the first information.

Optionally, in some embodiments, the first duration is configured via an RRC release message.

Optionally, in some embodiments, the first duration is the duration of a first timer, and the first timer is configured by an RRC release message.

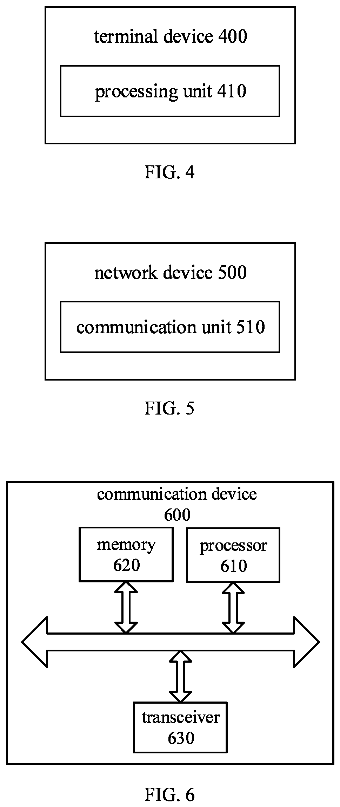

The method embodiments of the present disclosure are described in detail above in connection with FIG. 2 to FIG. 3, and the device embodiments of the present disclosure will be described in detail below in connection with FIG. 4 to FIG. 7. It should be understood that the device embodiments and the method embodiments correspond to each other, and similar descriptions can be referred to the method embodiments.

FIG. 4 is a schematic block diagram of a terminal device 400 according to an embodiment of the present disclosure. As shown in FIG. 4, the terminal device 400 includes a processing unit 410.

The processing unit 410 is configured to: determine a target priority of a frequency point or a cell according to first information, wherein the first information is used to indicate network slice related information.

Optionally, in some embodiments, the processing unit 410 is further configured to:
perform cell reselection measurement and/or cell reselection according to the target priority.

Optionally, in some embodiments, the first information includes at least one of:
information of at least one network slice of the terminal device;
information of a network slice supported by a candidate cell, wherein the candidate cell includes at least one of a serving cell of the terminal device, a neighboring cell and a cell supporting the network slice; and
a frequency point priority configuration information set, wherein the frequency point priority configuration information set includes at least one piece of frequency point priority configuration information, each frequency point priority configuration information corresponds to one or more network slices, and each frequency point priority configuration information includes at least one frequency layer and/or a frequency point priority corresponding to the at least one frequency layer.

Optionally, in some embodiments, the information of at least one network slice of the terminal device is information of at least one network slice supported by the terminal device, or information of at least one network slice selected by the terminal device, or pre-configured network slice information, or information of at least one allowable network slice of the terminal device, or information of at least one registered network slice of the terminal device; or
the information of at least one network slice of the terminal device is a union of at least two of the information of at least one network slice supported by the terminal device, the information of at least one network slice selected by the terminal device, the information of at least one allowable network slice of the terminal device, the information of at least one registered network slice of the terminal device, and the pre-configured network slice information; or
the information of at least one network slice of the terminal device is an intersection of at least two of the information of at least one network slice supported by the terminal device, the information of at least one network slice selected by the terminal device, the information of at least one allowable network slice of the terminal device, the information of at least one registered network slice of the terminal device, and the pre-configured network slice information.

Optionally, in some embodiments, the information of at least one network slice of the terminal device includes at least one of:
identity information of the at least one network slice;
at least one frequency point corresponding to the at least one network slice;
at least one cell corresponding to the at least one network slice; and
at least one priority corresponding to the at least one network slice.

Optionally, in some embodiments, the terminal device 400 further includes:
a communication unit configured to obtain the information of the network slice supported by the candidate cell from a broadcast message or Radio Resource Control (RRC) signaling.

Optionally, in some embodiments, the information of the network slice supported by the candidate cell includes at least one of:
identity information of the network slice supported by the candidate cell;
a frequency point corresponding to the network slice supported by the candidate cell;
a cell corresponding to the network slice supported by the candidate cell; and
a priority corresponding to the network slice supported by the candidate cell.

Optionally, in some embodiments, the processing unit 410 is further configured to:
determine a target priority of the frequency point corresponding to the network slice supported by the serving cell as a first frequency point priority; or
determine a target priority of a frequency point of the serving cell as the first frequency point priority;
wherein the first frequency point priority is higher than a priority of a particular cell or a particular frequency point, or wherein the first frequency point priority is higher than a particular priority threshold.

Optionally, in some embodiments, the first frequency point priority is the highest frequency point priority.

Optionally, in some embodiments, the processing unit 410 is further configured to:
determine the target priority of the frequency point of the serving cell as the first frequency point priority in a case where a first condition is met.

Optionally, in some embodiments, the processing unit 410 is further configured to:
determine the target priority of the frequency point corresponding to the network slice supported by the serving cell as the first frequency point priority in a case where a first condition is met; or
determine a target priority of a frequency point corresponding to a particular network slice supported by the serving cell as the first frequency point priority in a case where a first condition is met.

Optionally, in some embodiments, the particular network slice is a network slice with the highest priority in a first network slice set or a network slice which the terminal device expects to select, and the first network slice set is the at least one network slice included in the information of at least one network slice of the terminal device.

Optionally, in some embodiments, the first condition includes at least one of the following that:
the network slice supported by the serving cell includes at least one network slice in a first network slice set, wherein the first network slice set is the at least one network slice included in the information of at least one network slice of the terminal device;
the network slice supported by the serving cell includes a network slice with the highest priority in the first network slice set;
the network slice supported by the serving cell includes the network slice which the terminal device expects to select;
the network slice supported by the serving cell is based on frequency point deployment;
the network slice supported by the serving cell is based on cell deployment;
the network slice supported by the serving cell is based on Tracking Area (TA) zone deployment;
the terminal device has a network slice support capability; and
the terminal device has the information of at least one network slice of the terminal device on the terminal device.

Optionally, in some embodiments, the processing unit 410 is further configured to:
perform cell reselection measurement and/or cell reselection for a frequency point or a cell supporting the particular network slice according to the first frequency point priority; or
perform cell reselection measurement and/or cell reselection for the frequency point of the serving cell according to the first frequency point priority.

Optionally, in some embodiments, the processing unit 410 is further configured to:
determine a target priority of a cell or a frequency point supporting a particular network slice as a second priority;
wherein the second priority is higher than a priority of a particular cell or a particular frequency point, the second priority is higher than a particular priority threshold, the particular network slice includes at least one network slice in a first network slice set, and the first network slice set is the at least one network slice included in the information of at least one network slice of the terminal device.

Optionally, in some embodiments, the particular network slice is a network slice with the highest priority in the first network slice set or a network slice which the terminal device expects to select.

Optionally, in some embodiments, the processing unit 410 is further configured to:
determine the target priority of the cell or the frequency point supporting the particular network slice as the second priority in a case where a second condition is met.

Optionally, in some embodiments, the second condition includes at least one of the following that:
the network slice supported by the serving cell includes at least one network slice in the first network slice set;
the network slice supported by the serving cell includes a network slice with the highest priority in the first network slice set;
the network slice supported by the serving cell includes the network slice which the terminal device expects to select;
the network slice supported by the serving cell is based on frequency point deployment;
the network slice supported by the serving cell is based on cell deployment;
the network slice supported by the serving cell is based on TA zone deployment;
the terminal device has a network slice support capability; and
the terminal device has the information of at least one network slice of the terminal device.

Optionally, in some embodiments, the processing unit 410 is further configured to:
perform cell reselection measurement and/or cell reselection for the cell or the frequency point supporting the particular network slice according to the second priority.

Optionally, in some embodiments, the processing unit 410 is further configured to:
determine frequency point priority configuration information corresponding to a particular network slice in the frequency point priority configuration information set as target frequency point priority configuration information; and
determine the target priority according to the target frequency priority configuration information.

Optionally, in some embodiments, the particular network slice is indicated by a network device or determined by the terminal device.

Optionally, in some embodiments, the terminal device further includes:
a communication unit configured to receive first indication information from the network device, wherein the first indication information is used to indicate the terminal device to determine the target priority and/or identity information of the particular network slice according to the particular network slice.

Optionally, in some embodiments, the processing unit 410 is further configured to:
determine the particular network slice according to at least one of priority information corresponding to at least one network slice, a type of the terminal device, and a type of a service to be transmitted by the terminal device.

Optionally, in some embodiments, the frequency point priority configuration information set is obtained through a Radio Resource Control (RRC) release message.

Optionally, in some embodiments, the frequency point priority configuration information includes a frequency point priority configuration information set for cell reselection.

Optionally, in some embodiments, the processing unit 410 is further configured to:
perform the cell reselection measurement and/or the cell reselection according to the first information during a first duration.

Optionally, in some embodiments, the first duration is configured via an RRC release message.

Optionally, in some embodiments, the first duration is a duration of a first timer, and the first timer is configured by an RRC release message.

Optionally, in some embodiments, the processing unit 410 is further configured to:
perform the cell reselection measurement and/or the cell reselection according to a frequency or a cell priority configuration in RRC signaling or a broadcast message when the frequency point priority configuration information set is not configured or outside the first duration.

Optionally, in some embodiments, the above communication unit may be a communication interface or transceiver, or an input-output interface of a communication chip or system-on- chip. The above processing unit may be one or more processors.

It should be understood that the terminal device 400 according to the embodiments of the present disclosure may correspond to the terminal device in the method embodiments of the present disclosure, and that the above and other operations and/or functions of the individual units in the terminal device 400 are respectively intended to implement the corresponding processes of the terminal device in the method 200 shown in FIG. 2, and repeated descriptions are omitted here for brevity.

FIG. 5 is a schematic block diagram of a network device according to an embodiment of the present disclosure. The network device 500 in FIG. 5 includes a communication unit 510.

The communication unit 510 is configured to send first information to a terminal device, wherein the first information is used to indicate network slice related information, and the first information is used for the terminal device to determine a target priority of a frequency point or a cell.

Optionally, in some embodiments, the first information includes at least one of:
information of a network slice supported by a candidate cell, wherein the candidate cell includes at least one of a serving cell of the terminal device, a neighboring cell and a cell supporting the network slice; and
a frequency point priority configuration information set, wherein the frequency point priority configuration information set includes at least one piece of frequency point priority configuration information, each frequency point priority configuration information corresponds to one or more network slices, and each frequency point priority configuration information includes at least one frequency layer and/or a frequency point priority corresponding to the at least one frequency layer.

Optionally, in some embodiments, the communication unit 510 is further configured to:
send the information of the network slice supported by the candidate cell to the terminal device via a broadcast message or Radio Resource Control (RRC) signaling.

Optionally, in some embodiments, information of the network slice supported by the candidate cell includes at least one of:
identity information of the network slice supported by the candidate cell;
a frequency point corresponding to the network slice supported by the candidate cell;
a cell corresponding to the network slice supported by the candidate cell; and
a priority corresponding to the network slice supported by the candidate cell.

Optionally, in some embodiments, the frequency point priority configuration information set is obtained through a Radio Resource Control (RRC) release message.

Optionally, in some embodiments, the communication unit 510 is configured to:
send first indication information to the terminal device, wherein the first indication information is used to indicate the terminal device to determine the target priority and/or identity information of a particular network slice according to the particular network slice.

Optionally, in some embodiments, the communication unit 510 is configured to:
send first configuration information to the terminal device, wherein the first configuration information is used to configure a first duration, and during the first duration, the terminal device performs cell reselection measurement and/or cell reselection based on the first information.

Optionally, in some embodiments, the first duration is configured via an RRC release message.

Optionally, in some embodiments, the first duration is a duration of a first timer, and the first timer is configured by an RRC release message.

Optionally, in some embodiments, the above communication unit may be a communication interface or transceiver, or an input-output interface of a communication chip or system-on- chip. The above processing unit may be one or more processors.

It should be understood that the network device 500 according to the embodiments of the present disclosure may correspond to the network device in the method embodiments of the present disclosure, and that the above and other operations and/or functions of the individual units in the network device 500 are respectively intended to implement the corresponding processes of the network device in the method 300 shown in FIG. 3, and repeated descriptions are omitted here for brevity.

FIG. 6 is a schematic structural diagram of a communication device 600 according to an embodiment of the present disclosure. The communication device 600 shown in FIG. 6 includes a processor 610, and the processor 610 may call and run a computer program from a memory to perform the method in embodiments of the present disclosure.

According to embodiments, as shown in FIG. 6, the communication device 600 may further include a memory 620. The processor 610 may call and run a computer program from the memory 620 to perform the method in embodiments of the present disclosure.

The memory 620 may be a separate device independent of the processor 610, or may be integrated in the processor 610.

According to embodiments, as shown in FIG. 6, the communication device 600 may further include a transceiver 630, and the processor 610 may control the transceiver 630 to communicate with other devices. Specifically, the transceiver may send information or data to other devices, or receive information or data sent by other devices.

The transceiver 630 may include a transmitter and a receiver. The transceiver 630 may further include one or more antennas.

According to embodiments, the communication device 600 may specifically be the network device according to an embodiment of the present disclosure, and the communication device 600 may implement the corresponding processes implemented by the network device in the method embodiments of the present disclosure.

According to embodiments, the communication device 600 may specifically be the mobile terminal/terminal device in embodiments of the present disclosure, and the communication device 600 may implement the corresponding processes implemented by the mobile terminal/terminal device in the method embodiments of the present disclosure. For brevity, details are not repeated here.

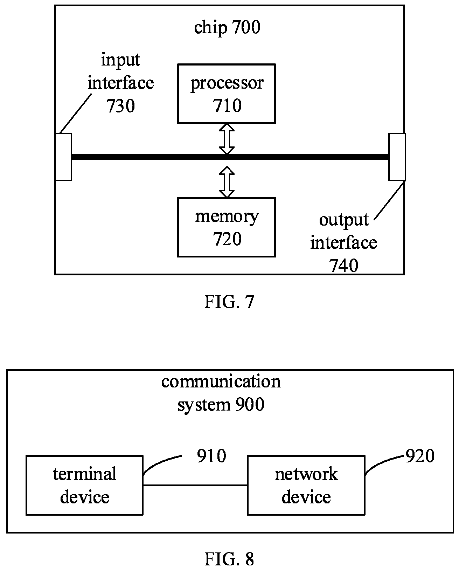

FIG. 7 is a schematic structural diagram of a chip according to an embodiment of the present disclosure. The chip 700 shown in FIG. 7 includes a processor 710, and the processor 710 can call and run a computer program from a memory to implement the method according to embodiments of the present disclosure.

According to embodiments, as shown in FIG. 7, the chip 700 may further include a memory 720. The processor 710 may call and run a computer program from the memory 720 to implement the method according to embodiments of the present disclosure.

The memory 720 may be a separate device independent of the processor 710, or may be integrated in the processor 710.

According to embodiments, the chip 700 may further include an input interface 730. The processor 710 may control the input interface 730 to communicate with other devices or chips, and specifically, the processor 710 can control the input interface to obtain information or data sent by other devices or chips.

According to embodiments, the chip 700 may further include an output interface 740. The processor 710 can control the output interface 740 to communicate with other devices or chips, and specifically, the processor 710 can control the output interface 740 to output information or data to other devices or chips.

According to embodiments, the chip can be applied to the network device in embodiments of the present disclosure, and the chip can implement the corresponding processes implemented by the network device in various methods according to embodiments of the present disclosure. For brevity, details are not repeated herein again.

According to embodiments, the chip can be applied to the mobile terminal/terminal device in embodiments of the present disclosure, and the chip can implement the corresponding processes implemented by the mobile terminal/terminal device in various methods according to embodiments of the present disclosure. For brevity, details are not repeated herein again.

It should be understood that the chip in the embodiments of the present disclosure may also be referred to as a system-level chip, a system chip, a chip system, or a system-on-chip, etc.

FIG. 8 is a schematic block diagram of a communication system 900 according to an embodiment of the present disclosure. As shown in FIG. 8, the communication system 900 includes a terminal device 910 and a network device 920.

The terminal device 910 can be used to implement the corresponding functions implemented by the terminal device in the above method embodiments, and the network device 920 can be used to implement the corresponding functions implemented by the network device in the above method embodiments. For brevity, details are not repeated here.

It should be understood that the processor in embodiments of the present disclosure may be an integrated circuit chip with signal processing capability. In implementations, the steps of the foregoing method embodiments can be completed by hardware integrated logic circuits in the processor or instructions in the form of software. The above-mentioned processor may be a general-purpose processor, a Digital Signal Processor (DSP), an Application Specific Integrated Circuit (ASIC), a Field Programmable Gate Array (FPGA) or other programmable logic device, discrete gate or transistor logic device, discrete hardware component. The methods, steps, and logical block diagrams disclosed in the embodiments of the present disclosure can be implemented or executed. The general-purpose processor may be a microprocessor or the processor may also be any conventional processor or the like. The steps of the methods disclosed in the embodiments of the present disclosure may be directly embodied as being executed and completed by a hardware decoding processor, or executed by a combination of hardware and software modules in the decoding processor. The software module can be located in a storage medium in the field, such as random access memory, flash memory, read-only memory, programmable read-only memory, or electrically erasable programmable memory, register. The storage medium is located in the memory, and the processor reads the information in the memory to perform the steps of the above methods in combination with hardware.

It can be understood that the memory in the embodiments of the present disclosure may be volatile memory or non-volatile memory, or may include both volatile and non-volatile memory. The non-volatile memory can be Read-Only Memory (ROM), Programmable ROM (PROM), Erasable PROM (EPROM), Electrically EPROM (EEPROM) or flash memory. The volatile memory may be a Random Access Memory (RAM), which is used as an external cache. By way of exemplary rather than limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM) ), or Direct Rambus RAM (DR RAM). It should be noted that the memory in the systems and methods described in the present disclosure is intended to include but not limited to these and any other suitable types of memory.

It should be understood that the foregoing memory is exemplary but not restrictive. For example, the memory in embodiments of the present disclosure may also be Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), or Direct Rambus RAM (DR RAM), and so on. That is to say, the memory in embodiments of the present disclosure is intended to include but not limited to these and any other suitable types of memory.

An embodiment of the present disclosure also provides a computer-readable storage medium for storing computer programs.

According to embodiments, the computer-readable storage medium may be applied to the network device in embodiments of the present disclosure, and the computer programs cause a computer to perform the corresponding processes implemented by the network device in each method embodiment of the present disclosure. For brevity, repeated descriptions are omitted here.

According to embodiments, the computer-readable storage medium may be applied to the mobile terminal/terminal device in embodiments of the present disclosure, and the computer programs cause a computer to perform the corresponding processes implemented by the mobile terminal/terminal device in each method embodiment of the present disclosure. For brevity, repeated descriptions are omitted here.

An embodiment of the present disclosure provides a computer program product, including computer program instructions.

According to embodiments, the computer program product may be applied to the network device in embodiments of the present disclosure, and the computer program instructions cause a computer to perform the corresponding processes implemented by the network device in each method embodiment of the present disclosure. For brevity, repeated descriptions are omitted here.

According to embodiments, the computer program product may be applied to the mobile terminal/terminal device in embodiments of the present disclosure, and the computer program instructions cause a computer to perform the corresponding processes implemented by the mobile terminal/terminal device in each method embodiment of the present disclosure. For brevity, repeated descriptions are omitted here.

An embodiment of the present disclosure also provides a computer program.

According to embodiments, the computer program may be applied to the network device in embodiments of the present disclosure, and when the computer program runs on a computer, the computer is caused to perform the corresponding processes implemented by the network device in each method embodiment of the present disclosure. For brevity, repeated descriptions are omitted here.

According to embodiments, the computer program may be applied to the mobile terminal/terminal device in embodiments of the present disclosure, and when the computer program runs on a computer, the computer is caused to perform the corresponding processes implemented by the mobile terminal/terminal device in each method embodiment of the present disclosure. For brevity, repeated descriptions are omitted here.

Those of ordinary skill in the art will appreciate that the exemplary units and algorithm steps described according to embodiments disclosed herein can be carried out by electronic hardware or a combination of electronic hardware and computer software. Whether the functions are implemented by hardware or software depends on particular applications and design constraints of the technical solutions. For each of the particular applications, a person skilled in the art can use different methods to implement the described functions, but such implementation should not be considered as beyond the scope of the present disclosure.

It may be clearly understood by those skilled in the art that details of specific operation procedures of the systems, devices and units can be found in the previous description regarding the method embodiments.

In the embodiments provided in the present disclosure, it should be understood that the disclosed systems, devices and methods may be implemented in other ways. For example, the device embodiments described above are merely illustrative. For example, the division of the units is only a kind of logical function division. In practice, other division manner may be used. For example, multiple units or components may be combined or integrated into another system, or some features may be ignored or not performed. In addition, the illustrated or discussed mutual coupling or direct coupling or communication connection may be indirect coupling or communication connection through some interfaces, devices or units, and may be in electrical, mechanical or other forms.

The units described as separated parts may or may not be physically separated, and the parts displayed as units may or may not be physical units, that is, the units may be located in one place, or may be distributed over multiple network units. Some or all of the units may be selected according to actual needs to achieve the objectives of the solutions in the embodiments.

In addition, the functional units in the embodiments of the present disclosure may be integrated in one processing unit, or the units may exist alone physically, or two or more units may be integrated in one unit.

The functions may also be stored in a computer-readable storage medium if being implemented in the form of a software functional unit and sold or used as an independent product. Based on such understanding, the essence of the technical solutions of the present disclosure, or the part contributing to the prior art or part of the technical solutions, may be embodied in the form of a software product. The computer software product is stored in a storage medium including a number of instructions such that a computer device (which may be a personal computer, a server, or a network device, etc.) performs all or part of steps of the method described in each of the embodiments of the present disclosure. The foregoing storage medium includes: any medium that is capable of storing program codes such as a USB disk, a mobile hard disk, a Read-Only Memory (ROM), a Random Access Memory (RAM), a magnetic disk or an optical disk, and the like.

The foregoing descriptions are merely exemplary embodiments of the present disclosure, but the protection scope of the present disclosure is not limited thereto. Therefore, the protection scope of the present disclosure should be defined by the appended claims.

## Claims

1. A wireless communication method, comprising:
receiving, from a network device, first configuration information by a terminal device, wherein the first configuration information is used to configure a first duration, wherein within the first duration, the terminal device performs cell reselection based on first information provided by the network device, wherein the first duration is a duration of a first timer, and the first timer is configured by a Radio Resource Control, RRC, release message, and wherein outside the first duration, the terminal device performs cell reselection measurement and/or cell reselection according to frequency priority information configured in a RRC signaling or broadcast message;
during the first duration, determining (S210), by the terminal device (120), a target priority of a frequency point according to the first information, wherein the first information is used to indicate network slice related information,
wherein the first information comprises: information of at least one network slice of the terminal device,
wherein determining, by the terminal device (120), the target priority of the frequency point according to the first information comprises:
determining the target priority of the frequency point supporting a particular network slice as a second priority;
adjusting, by the terminal device, the frequency point supporting the particular network slice as the frequency point of the second priority;
wherein the frequency point of the second priority is a high priority frequency point, the second priority is higher than a particular priority threshold, the frequency point supporting the particular network slice is: a frequency point supporting at least one network slice in the at least one network slice of the terminal device, or a frequency point supporting at least one network slice in at least one network slice allowable of the terminal device,
wherein the particular network slice comprises at least one network slice in a first network slice set, and the first network slice set is the at least one network slice comprised in information of the at least one network slice of the terminal device.

2. The method according to claim 1, wherein the first information further comprises:
information of a network slice supported by a candidate cell;
wherein the candidate cell comprises at least one of a serving cell of the terminal device, a neighboring cell and a cell supporting the network slice.

3. The method according to claim 1, wherein the information of at least one network slice of the terminal device (120) comprises at least one of:
identity information of the at least one network slice;
at least one frequency point corresponding to the at least one network slice;
at least one cell corresponding to the at least one network slice; and
at least one priority corresponding to the at least one network slice.

4. The method according to any one of claims 2-3, further comprising:
obtaining, by the terminal device (120), the information of the network slice supported by the candidate cell from the broadcast message or RRC signaling.

5. The method according to any one of claims 2-4, wherein the information of the network slice supported by the candidate cell comprises at least one of:
identity information of the network slice supported by the candidate cell;
a frequency point corresponding to the network slice supported by the candidate cell;
a cell corresponding to the network slice supported by the candidate cell; and
a priority corresponding to the network slice supported by the candidate cell.

6. The method according to claim 1, further comprising:
performing, by the terminal device (120), cell reselection measurement and/or cell reselection for the cell or the frequency point supporting the particular network slice according to the second priority.

7. A terminal device (120), configured to perform the method according to any one of claims 1 to 6.

## Patentansprüche

1. Drahtloskommunikationsverfahren, umfassend:
Empfangen, von einer Netzwerkvorrichtung, von ersten Konfigurationsinformationen durch eine Endgerätevorrichtung,
wobei die ersten Konfigurationsinformationen verwendet werden, um eine erste Dauer zu konfigurieren, wobei innerhalb der ersten Dauer die Endgerätevorrichtung eine Zellenneuauswahl basierend auf ersten Informationen, die durch die Netzwerkvorrichtung bereitgestellt werden, durchführt, wobei die erste Dauer eine Dauer eines ersten Timers ist, und der erste Timer durch eine Funkressourcensteuerungs- bzw. RRC-Freigabenachricht konfiguriert wird, und wobei außerhalb der ersten Dauer die Endgerätevorrichtung eine Zellenneuauswahlmessung und/oder eine Zellenneuauswahl gemäß Frequenzprioritätsinformationen durchführt, die in einer RRC-Signalisierung oder Broadcast-Nachricht konfiguriert sind;
während der ersten Dauer, Bestimmen (S210), durch die Endgerätevorrichtung (120), einer Zielpriorität eines Frequenzpunkts gemäß den ersten Informationen, wobei die ersten Informationen verwendet werden, um Netzwerk-Slice-bezogene Informationen anzugeben,
wobei die ersten Informationen umfassen: Informationen mindestens eines Netzwerk-Slice der Endgerätevorrichtung,
wobei das Bestimmen, durch die Endgerätevorrichtung (120), der Zielpriorität des Frequenzpunkts gemäß den ersten Informationen umfasst:
Bestimmen der Zielpriorität des Frequenzpunkts, der ein bestimmtes Netzwerk-Slice unterstützt, als eine zweite Priorität;
Anpassen, durch die Endgerätevorrichtung, des Frequenzpunkts, der das bestimmte Netzwerk-Slice unterstützt, als den Frequenzpunkt der zweiten Priorität; wobei der Frequenzpunkt der zweiten Priorität ein Frequenzpunkt hoher Priorität ist, wobei die zweite Priorität höher als eine bestimmte Prioritätsschwelle ist, wobei der Frequenzpunkt, der das bestimmte Netzwerk-Slice unterstützt, Folgendes ist: ein Frequenzpunkt, der mindestens ein Netzwerk-Slice in dem mindestens einen Netzwerk-Slice der Endgerätevorrichtung unterstützt, oder ein Frequenzpunkt, der mindestens ein Netzwerk-Slice in mindestens einem zulässigen Netzwerk-Slice der Endgerätevorrichtung unterstützt,
wobei das bestimmte Netzwerk-Slice mindestens ein Netzwerk-Slice in einem ersten Netzwerk-Slice-Satz umfasst und der erste Netzwerk-Slice-Satz das mindestens eine Netzwerk-Slice ist, das in Informationen des mindestens einen Netzwerk-Slice der Endgerätevorrichtung enthalten ist.

2. Verfahren nach Anspruch 1, wobei die ersten Informationen ferner umfassen:
Informationen eines Netzwerk-Slice, das von einer Kandidatenzelle unterstützt wird;
wobei die Kandidatenzelle mindestens eines von einer bedienenden Zelle der Endgerätevorrichtung, einer Nachbarzelle und einer Zelle, die das Netzwerk-Slice unterstützt, umfasst.

3. Verfahren nach Anspruch 1, wobei die Informationen mindestens eines Netzwerk-Slice der Endgerätevorrichtung (120) mindestens eines von Folgendem umfassen Identitätsinformationen des mindestens einen Netzwerk-Slice;
mindestens einen Frequenzpunkt, der dem mindestens einen Netzwerk-Slice entspricht;
mindestens eine Zelle, die dem mindestens einen Netzwerk-Slice entspricht; und
mindestens eine Priorität, die dem mindestens einen Netzwerk-Slice entspricht.

4. Verfahren nach einem der Ansprüche 2-3, ferner umfassend:
Erhalten, durch die Endgerätevorrichtung (120), der Informationen des Netzwerk-Slice, das von der Kandidatenzelle unterstützt wird, aus der Broadcast-Nachricht oder RRC-Signalisierung.

5. Verfahren nach einem der Ansprüche 2-4, wobei die Informationen des Netzwerk-Slice, das von der Kandidatenzelle unterstützt wird, mindestens eines von Folgendem umfassen:
Identitätsinformationen des Netzwerk-Slice, das von der Kandidatenzelle unterstützt wird;
einen Frequenzpunkt, der dem Netzwerk-Slice entspricht, das von der Kandidatenzelle unterstützt wird;
eine Zelle, die dem Netzwerk-Slice entspricht, das von der Kandidatenzelle unterstützt wird; und
eine Priorität, die dem Netzwerk-Slice entspricht, das von der Kandidatenzelle unterstützt wird.

6. Verfahren nach Anspruch 1, ferner umfassend:
Durchführen, durch die Endgerätevorrichtung (120), einer Zellenneuauswahlmessung und/oder einer Zellenneuauswahl für die Zelle oder den Frequenzpunkt, die bzw. der das bestimmte Netzwerk-Slice unterstützt, gemäß der zweiten Priorität.

7. Endgerätevorrichtung (120), die dazu ausgelegt ist, das Verfahren nach einem der Ansprüche 1 bis 6 durchzuführen.

## Revendications

1. Procédé de communication sans fil, comprenant :
la réception, par un dispositif terminal, d'une première information de configuration provenant d'un périphérique réseau, cette première information de configuration étant utilisée pour configurer une première durée, pendant cette première durée, le dispositif terminal exécutant une resélection de cellule en se basant sur une première information fournie par le périphérique réseau, la première durée étant une durée d'une première minuterie, et la première minuterie étant configurée par un message de libération de contrôle de ressources radio, RRC, et,
en dehors de la première durée, le dispositif terminal exécutant une mesure de resélection de cellule et/ou une resélection de cellule selon l'information de priorité de fréquences configurée dans un message de signalisation RRC ou de diffusion ;
pendant la première durée, la détermination (S210), par le dispositif terminal (120), d'une priorité cible d'un point de fréquence selon la première information, la première information étant utilisée pour indiquer une information liée à la tranche de réseau,
la première information comprenant : l'information de l'au moins une tranche de réseau du dispositif terminal, la détermination, par le dispositif terminal (120), de la priorité cible du point de fréquence selon la première information comprenant :
la détermination de la priorité cible du point de fréquence prenant en charge une tranche de réseau particulière comme une deuxième priorité ;
l'ajustement, par le dispositif terminal, du point de fréquence prenant en charge la tranche de réseau particulière comme le point de fréquence de la deuxième priorité ;
le point de fréquence de la deuxième priorité étant un point de fréquence à priorité élevée, la deuxième priorité étant plus élevée qu'un seuil de priorité particulier, le point de fréquence prenant en charge la tranche de réseau particulière étant : un point de fréquence prenant en charge au moins une tranche de réseau dans l'au moins une tranche de réseau du dispositif terminal, ou un point de fréquence prenant en charge au moins une tranche de réseau dans au moins une tranche de réseau admissible du dispositif terminal,
la tranche de réseau particulière comprenant au moins une tranche de réseau dans un premier ensemble de tranches de réseau, et le premier ensemble de tranches de réseau étant l'au moins une tranche de réseau comprise dans une information de l'au moins une tranche de réseau du dispositif terminal.

2. Procédé selon la revendication 1, dans lequel la première information comprend en outre :
l'information d'une tranche de réseau prise en charge par une cellule candidate ;
cette cellule candidate comprenant au moins soit une cellule de desserte du dispositif terminal, soit une cellule voisine, soit une cellule prenant en charge la tranche de réseau.

3. Procédé selon la revendication 1, dans lequel l'information d'au moins une tranche de réseau du dispositif terminal (120) comprend au moins :
soit l'information d'identité de l'au moins une tranche de réseau ;
soit au moins un point de fréquence correspondant à l'au moins une tranche de réseau ;
soit au moins une cellule correspondant à l'au moins une tranche de réseau ;
soit au moins une priorité correspondant à l'au moins une tranche de réseau.

4. Procédé selon l'une quelconque des revendications 2 à 3, comprenant en outre :
l'obtention, par le dispositif terminal (120), de l'information de la tranche de réseau prise en charge par la cellule candidate à partir du message de diffusion ou de la signalisation RRC.

5. Procédé selon l'une quelconque des revendications 2 à 4, dans lequel l'information de la tranche de réseau prise en charge par la cellule candidate comprend au moins :
soit l'information d'identité de la tranche de réseau prise en charge par la cellule candidate ;
soit un point de fréquence correspondant à la tranche de réseau prise en charge par la cellule candidate ;
soit une cellule correspondant à la tranche de réseau prise en charge par la cellule candidate ;
soit une priorité correspondant à la tranche de réseau prise en charge par la cellule candidate.

6. Procédé selon la revendication 1, comprenant en outre :
l'exécution, par le dispositif terminal (120), d'une mesure de resélection de cellule et/ou d'une resélection de cellule pour la cellule ou le point de fréquence prenant en charge la tranche de réseau particulière selon la deuxième priorité.

7. Dispositif terminal (120), configuré de façon à exécuter le procédé selon l'une quelconque des revendications 1 à 6.
